# EUROPEAN PATENT APPLICATION

(11) **EP 4 617 920 A1**
(43) Date of publication of application: **17.09.2025**
(21) Application number: 25162505.9
(22) Date of filing: 10.03.2025
(51) Int. Cl.: G06F 18/2111, G06V 10/24, G06V 10/25, G06V 10/32, G06V 10/77, G06V 10/776, G06V 10/82, G06V 40/16

(54) **FRAMEWORK FOR CREATING A FACE RECOGNITION SYSTEM IN A TINY MACHINE LEARNING MODEL**

(30) Priority: 12.03.2024 IN 202421017956
(71) Applicant: Tata Consultancy Services Limited, Maharashtra (IN)
(72) Inventor: DEY, Swarnava, 700135 Kolkata, West Bengal (IN); DASGUPTA, Soma, 700135 Kolkata, West Bengal (IN)
(74) Representative: Goddar, Heinz J.

(57) **Abstract**

Nowadays, intelligent analysis of image data becomes increasingly pivotal in various domains such as robotics, autonomous vehicles, security, and first level disease detection. Existing techniques available for image processing requires large computing structure and suffers from high search time for searching networks connected in complex manner. Present disclosure provides method and system for creating face recognition system in tiny machine leaning (ML) model using genetic algorithm. The system first receives training images which are then pre-processed to obtain facial images. Then, system creates master dataset and reduced datasets. Further, system creates plurality of gene structures using tiny neural network. Each gene structures is then trained with created reduced dataset. Furthermore, performance of each trained gene structure is evaluated based on accuracy score and model size which helps in determining best gene structure among the plurality of gene structures. Finally, tiny new ML model is created based on best gene structure.

## Description

### CROSS-REFERENCE TO RELATED APPLICATIONS AND PRIORITY

The present application claims priority to Indian application no. Indian Patent Application No. 202421017956, filed on March 12, 2024.

### TECHNICAL FIELD

The disclosure herein generally relates to face recognition, and, more particularly, to a method and a system for creating face recognition system in a tiny machine leaning (ML) model using genetic algorithm.

### BACKGROUND

The emergence of Artificial Intelligence (AI) and Machine Learning (ML) models works as key enablers for intelligent analysis of image data in various domains such as robotics, autonomous vehicles, security, first level disease detection and the like. This emergence has brought forward unique challenges pertaining to the nature of computing devices that are to be used as people are preferring models that can work in resource limited settings.

In these kind of scenarios, niche skillsets of people working both in machine learning and embedded systems with domain knowledge related to image dataset are needed to create DNN models for embedded resource-limited systems. Large, full-fledged DNN models have many layers and complex operations, that can extract low-level features from images. However, it's very challenging to handcraft tiny models related to image classification and recognition as diverse variety of datasets are available for image processing, such as image classification and recognition, and the tiny models have very limited number of layers and operations for automatic feature extraction. Both of these tasks need to extract good low-level features, depending upon the image.

Some existing approaches available for performing image processing like Neural Architecture Search (NAS) provides customized models for the target architecture. However, NAS requires large computing structure for building multi-objective models and suffers from high search time for searching networks connected in complex manner. Even, if the network is simple, with very limited number of layers, the existing NAS methods cannot generate accurate models for image classification and recognition, in absence of customized feature extractor (dimensionality reducer).

### SUMMARY

Embodiments of the present disclosure present technological improvements as solutions to one or more of the above-mentioned technical problems recognized by the inventors in conventional systems. For example, in one aspect, there is provided a method for creating face recognition system in a tiny machine leaning (ML) model using genetic algorithm. The method comprises receiving, by a system via one or more hardware processors, a plurality of training images associated with a plurality of subjects, wherein the plurality of training images comprises one or more classified images of each subject of the plurality of subjects; preprocessing, by the system via one or more hardware processors, the plurality of training images using one or more preprocessing techniques to obtain a plurality of pre-processed training images, wherein the plurality of pre-processed training images comprises one or more pre-processed classified images; assigning, by the system via the one or more hardware processors, an unknown class label to at least one pre-processed classified image of at least one subject of the plurality of subjects to obtain one or more unknown class label face images; creating, by the system via the one or more hardware processors, a master dataset by combining the one or more pre-processed classified images and the one or more unknown class label face images; creating, by the system via the one or more hardware processors, a plurality of reduced datasets based on the master dataset using one or more dimensionality reduction methods, wherein each reduced dataset of the plurality of reduced datasets is created based on an output dimension of a dimensionality reduction method, wherein the one or more dimensionality reduction methods and one or more output dimensions of each dimensionality reduction method are accessed from a predefined option list; iteratively performing: creating, by the system via the one or more hardware processors, a plurality of gene structures using a tiny neural network, wherein each gene structure of the plurality of gene structures encodes the dimensionality reduction method, the output dimension of the respective dimensionality reduction method and one or more tiny neural network parameters, wherein the dimensionality reduction method, the output dimension of the respective dimensionality reduction method and the one or more tiny neural network parameters for each gene structure are randomly chosen from the predefined option list; for each gene structure of the plurality of gene structures, performing: creating, by the system via the one or more hardware processors, a tiny machine learning (ML) model for a respective gene structure; training, by the system via the one or more hardware processors, the tiny ML model with a reduced dataset of the plurality of reduced datasets to obtain a trained tiny ML model, wherein the reduced dataset is selected based on the dimensionality reduction method and the output dimension of the dimensionality reduction method encoded in the respective gene structure; evaluating, by the system via the one or more hardware processors, the trained tiny ML model to obtain an accuracy score and a model size of the trained tiny ML model using a predefined evaluation technique; and updating, by the system via the one or more hardware processors, the respective gene structure with the obtained accuracy score and the model size; selecting, via the one or more hardware processors, one or more gene structures from the plurality of gene structures based on the accuracy score and the model size of the corresponding gene structures; creating, by the system via the one or more hardware processors, a new option list, wherein the new option list comprises the dimensionality reduction method, the output dimension of the respective dimensionality reduction method and the one or more tiny neural network parameters of each selected gene structure of the one or more selected gene structures; and identifying, by the system via the one or more hardware processors, the new option list as the predefined option list, until a gene structure that fulfills a predefined gene selection criteria is obtained; identifying, by the system via the one or more hardware processors, the selected gene structure as a final gene structure; accessing, by the system via the one or more hardware processors, the dimensionality reduction method, the output dimension of the respective dimensionality reduction method and the one or more tiny neural network parameters of the final gene structure; creating, by the system via the one or more hardware processors, a new tiny ML model using the accessed dimensionality reduction method, the output dimension of the respective dimensionality reduction method and the one or more tiny neural network parameters; and storing, by the system via the one or more hardware processors, the new tiny ML model.

In an embodiment, wherein the step of pre-processing the plurality of training images using the one or more preprocessing techniques to obtain the plurality of pre-processed training images comprises: detecting, by the system via the one or more hardware processors, a face portion in each training image of the plurality of training images using a face detector; extracting, by the system via the one or more hardware processors, the detected face portion from each training image to obtain a class label face image associated with each training image, wherein a plurality of class label face images are obtained for the plurality of training images; and resizing, by the system via the one or more hardware processors, each class label face image of the plurality of class label face images based on a predefined resizing criteria to obtain a plurality of resized face images.

In an embodiment, wherein the step of creating the plurality of reduced datasets based on the master dataset using the one or more dimensionality reduction methods comprises: for each output dimension of the one or more output dimensions of each dimensionality reduction method of the one or more dimensionality reduction methods, performing: applying, by the system via the one or more hardware processors, a respective output dimension of a respective dimensionality reduction method on the master dataset to obtain a reduced dataset; and storing, by the system via the one or more hardware processors, the obtained reduced dataset in a database, wherein a collection of the reduced datasets stored in the database is referred as the plurality of reduced datasets.

In an embodiment, wherein the step of creating the plurality of gene structures using the tiny neural network comprises: creating, by the system via the one or more hardware processors, a plurality of gene data structures; and for each gene data structure of the plurality of gene data structures, performing: selecting, by the system via the one or more hardware processors, a dimensionality reduction method randomly from the one or more dimensionality reduction methods that are defined in the predefined option list; selecting, by the system via the one or more hardware processors, an output dimension randomly from the one or more output dimensions of the selected dimensionality reduction method that are defined in the predefined option list; setting, by the system via the one or more hardware processors, a number of neurons in an input layer of a respective gene data structure based on the selected output dimension; selecting, by the system via the one or more hardware processors, one or more other hyperparameters randomly from the predefined option list based on the selected dimensionality reduction method and the output dimension from the predefined option list, wherein the one or more other hyperparameters comprises a number of hidden neurons, a feature subset, an activation function choice, a batch size and a learning rate choice; and generating a gene structure based, at least in part, on the selected dimensionality reduction method, the selected output dimension, the set number of neurons in the input layer and the selected one or more other hyperparameters, wherein the collection of the generated gene structure for each gene data structure is referred as the plurality of gene structures.

In another aspect, there is provided a system for creating face recognition system in a tiny machine leaning (ML) model using genetic algorithm. The system comprises a memory storing instructions; one or more communication interfaces; and one or more hardware processors coupled to the memory via the one or more communication interfaces, wherein the one or more hardware processors are configured by the instructions to: receive a plurality of training images associated with a plurality of subjects, wherein the plurality of training images comprises one or more classified images of each subject of the plurality of subjects; preprocess the plurality of training images using one or more preprocessing techniques to obtain a plurality of pre-processed training images, wherein the plurality of pre-processed training images comprises one or more pre-processed classified images; assign an unknown class label to at least one pre-processed classified image of at least one subject of the plurality of subjects to obtain one or more unknown class label face images; create a master dataset by combining the one or more pre-processed classified images and the one or more unknown class label face images; create a plurality of reduced datasets based on the master dataset using one or more dimensionality reduction methods, wherein each reduced dataset of the plurality of reduced datasets is created based on an output dimension of a dimensionality reduction method, wherein the one or more dimensionality reduction methods and one or more output dimensions of each dimensionality reduction method are accessed from a predefined option list; iteratively perform: create a plurality of gene structures using a tiny neural network, wherein each gene structure of the plurality of gene structures encodes the dimensionality reduction method, the output dimension of the respective dimensionality reduction method and one or more tiny neural network parameters, wherein the dimensionality reduction method, the output dimension of the respective dimensionality reduction method and the one or more tiny neural network parameters for each gene structure are randomly chosen from the predefined option list; for each gene structure of the plurality of gene structures, perform: create a tiny machine learning (ML) model for a respective gene structure; train the tiny ML model with a reduced dataset of the plurality of reduced datasets to obtain a trained tiny ML model, wherein the reduced dataset is selected based on the dimensionality reduction method and the output dimension of the dimensionality reduction method encoded in the respective gene structure; evaluate the trained tiny ML model to obtain an accuracy score and a model size of the trained tiny ML model using a predefined evaluation technique; and update the respective gene structure with the obtained accuracy score and the model size; select one or more gene structures from the plurality of gene structures based on the accuracy score and the model size of the corresponding gene structures; create a new option list, wherein the new option list comprises the dimensionality reduction method, the output dimension of the respective dimensionality reduction method and the one or more tiny neural network parameters of each selected gene structure of the one or more selected gene structures; and identify the new option list as the predefined option list, until a gene structure that fulfills a predefined gene selection criteria is obtained; identify the selected gene structure as a final gene structure; access the dimensionality reduction method, the output dimension of the respective dimensionality reduction method and the one or more tiny neural network parameters of the final gene structure; create a new tiny ML model using the accessed dimensionality reduction method, the output dimension of the respective dimensionality reduction method and the one or more tiny neural network parameters; and store the new tiny ML model.

In yet another aspect, there are provided one or more non-transitory machine-readable information storage mediums comprising one or more instructions which when executed by one or more hardware processors create face recognition system in a tiny machine leaning (ML) model using genetic algorithm by receiving, by a system, a plurality of training images associated with a plurality of subjects, wherein the plurality of training images comprises one or more classified images of each subject of the plurality of subjects; preprocessing, by the system, the plurality of training images using one or more preprocessing techniques to obtain a plurality of pre-processed training images, wherein the plurality of pre-processed training images comprises one or more pre-processed classified images; assigning, by the system, an unknown class label to at least one pre-processed classified image of at least one subject of the plurality of subjects to obtain one or more unknown class label face images; creating, by the system, a master dataset by combining the one or more pre-processed classified images and the one or more unknown class label face images; creating, by the system, a plurality of reduced datasets based on the master dataset using one or more dimensionality reduction methods, wherein each reduced dataset of the plurality of reduced datasets is created based on an output dimension of a dimensionality reduction method, wherein the one or more dimensionality reduction methods and one or more output dimensions of each dimensionality reduction method are accessed from a predefined option list; iteratively performing: creating, by the system, a plurality of gene structures using a tiny neural network, wherein each gene structure of the plurality of gene structures encodes the dimensionality reduction method, the output dimension of the respective dimensionality reduction method and one or more tiny neural network parameters, wherein the dimensionality reduction method, the output dimension of the respective dimensionality reduction method and the one or more tiny neural network parameters for each gene structure are randomly chosen from the predefined option list; for each gene structure of the plurality of gene structures, performing: creating, by the system, a tiny machine learning (ML) model for a respective gene structure; training, by the system, the tiny ML model with a reduced dataset of the plurality of reduced datasets to obtain a trained tiny ML model, wherein the reduced dataset is selected based on the dimensionality reduction method and the output dimension of the dimensionality reduction method encoded in the respective gene structure; evaluating, by the system, the trained tiny ML model to obtain an accuracy score and a model size of the trained tiny ML model using a predefined evaluation technique; and updating, by the system, the respective gene structure with the obtained accuracy score and the model size; selecting, by the system, one or more gene structures from the plurality of gene structures based on the accuracy score and the model size of the corresponding gene structures; creating, by the system, a new option list, wherein the new option list comprises the dimensionality reduction method, the output dimension of the respective dimensionality reduction method and the one or more tiny neural network parameters of each selected gene structure of the one or more selected gene structures; and identifying, by the system, the new option list as the predefined option list, until a gene structure that fulfills a predefined gene selection criteria is obtained; identifying, by the system, the selected gene structure as a final gene structure; accessing, by the system, the dimensionality reduction method, the output dimension of the respective dimensionality reduction method and the one or more tiny neural network parameters of the final gene structure; creating, by the system, a new tiny ML model using the accessed dimensionality reduction method, the output dimension of the respective dimensionality reduction method and the one or more tiny neural network parameters; and storing, by the system, the new tiny ML model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an example representation of an environment, related to at least some example embodiments of the present disclosure.
FIG. 2 illustrates an exemplary block diagram of a system for creating a face recognition system in a tiny machine leaning (ML) model using genetic algorithm, in accordance with an embodiment of the present disclosure.
FIGS. 3A, 3B, 3C and 3D, collectively, illustrate an exemplary flow diagram of a method for creating the face recognition system in a tiny ML model using genetic algorithm, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Tiny ML is a new paradigm of machine learning and inference on tiny devices. In many new-age applications, such as Internet-of-Things (IoT), robotics, automotive embedded systems, etc., it is very important to process data close to the source for low-latency response, reduced data transfer, and privacy preservation. Despite the growing popularity of Tiny ML, it is very difficult to carry out projects on a large scale. The reason for this is a critical dependency on skilled resources, who can design accurate and efficient models for very tiny devices, e.g. micro-controllers or microcontrollers based platforms.

As discussed earlier, many deep learning based face recognition models, such as DeepFace, DeepID, Facenet, VGG-Face and the like are available that can accurately perform face recognition, even in the wild. However, despite this progress, there are no known face recognition models that can work well in resource limited setting like MCUs. The demand of such systems are becoming increasingly important in projects, such as smart cities, Internet of Things (IoT), and human-robot communication. Further, in contrast to traditional facial biometric verification, these applications also require low-latency, first-level face recognition on IoT devices .

Existing techniques for face recognition are either handcrafted, small-scale or partially offloaded over network, or implemented on a more capable platform. However, these systems are not proven to work on any benchmark dataset nor demonstrated on any tiny platforms.

So, a technique that can create face recognition system which can be implemented in a tiny ML models running on microcontroller-based edge devices is still to be explored.

Embodiments of the present disclosure overcome the above-mentioned disadvantages by providing a method and a system for creating face recognition system in a tiny machine leaning (ML) model using a genetic algorithm. The system of the present disclosure helps a user in creating the face recognition system that can be implemented on a resource limited settings, like that of microcontroller-based edge devices. For achieving this, the system first receives training images which are then pre-processed to obtain facial images of the training images. Then, the system creates a master dataset which helps in training of a face recognition system to be created such that the face recognition system gets trained on looking at the facial features instead of unimportant discriminating features. Thereafter, the system creates a plurality of reduced datasets based on the master dataset using one or more dimensionality reduction methods predefined in a predefined option list.

Further, the system creates a plurality of gene structures using a tiny neural network. Each gene structures of the plurality of gene structures is then trained with a created reduced dataset. Furthermore, performance of each trained gene structure is evaluated based on accuracy score and model size which helps in determining the best gene structure among the plurality of gene structures. Finally, a tiny new ML model is created based on the best gene structure.

In the present disclosure, the system and the method trains the face recognition system on multiple unknown classes which makes the face recognition system to focus more on the facial features for face identification purpose, hence the created face recognition system accurately distinguishes between a known and an unknow face. The created face recognition system accurately works with the standard face recognition datasets, hence ensuring scalability and applicability of the face recognition system to other images. Further, the system neither performs any multi-objective optimization nor uses any costly inter-layer connection search, thereby ensuring creation of the face recognition system in very less time even without graphic processing unit (GPU) support. Additionally, the generated face recognition system are of very small size as compared to the systems generated using existing techniques, thus ensuring accurate workability of the created face recognition system in resource limited settings, such as microcontroller-based edge devices.

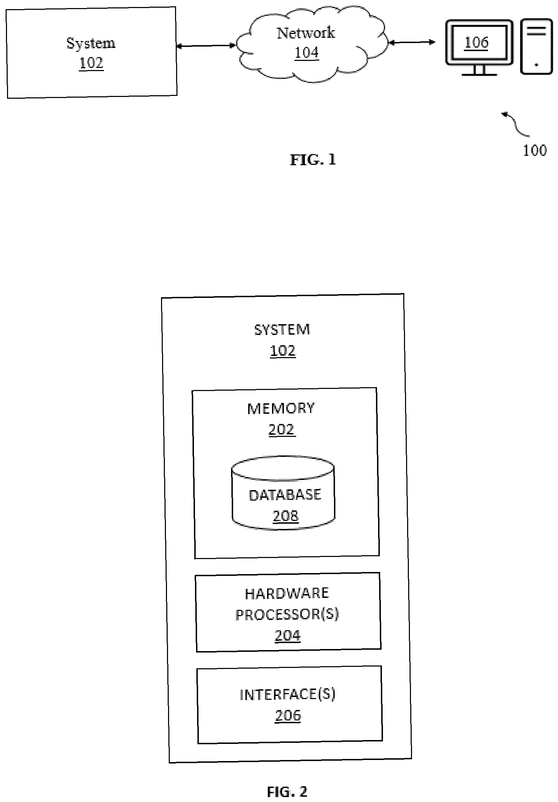

Referring now to the drawings, and more particularly to FIGS. 1 through 3D, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, assigning unknown class label to classified images, creating a master dataset and a plurality of reduced datasets, creating a plurality of gene structures, etc. The environment 100 generally includes a system 102, a user device 106, each coupled to, and in communication with (and/or with access to) a network 104. It should be noted that one user device is shown for explanation purpose, there can be multiple user devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 106 is associated with a user who wants to create a face recognition system in form of a tiny machine leaning (ML) model. Examples of the user device 106 include, but are not limited to, a personal computer (PC), a mobile phone, a tablet device, a Personal Digital Assistant (PDA), a server, a voice activated assistant, a smartphone, and a laptop.

The system 102 includes one or more hardware processors and a memory. The system 102 is first configured to receive a plurality of training images associated with a plurality of subjects via the network 104 from the user device 106. The plurality of training images includes one or more classified images of each subject of the plurality of subjects. The system 102 then preprocess each training image to extract a face portion of each training image. Thereafter, the system 102 assigns an unknown class label to some of the pre classified images to obtain few unknown class label face images.

Then, the system 102 creates a master dataset by combining the unknown class label face images and the pre classified images. The system 102 also creates a plurality of reduced datasets based on the master dataset using one or more dimensionality reduction methods predefined in a predefined option list.

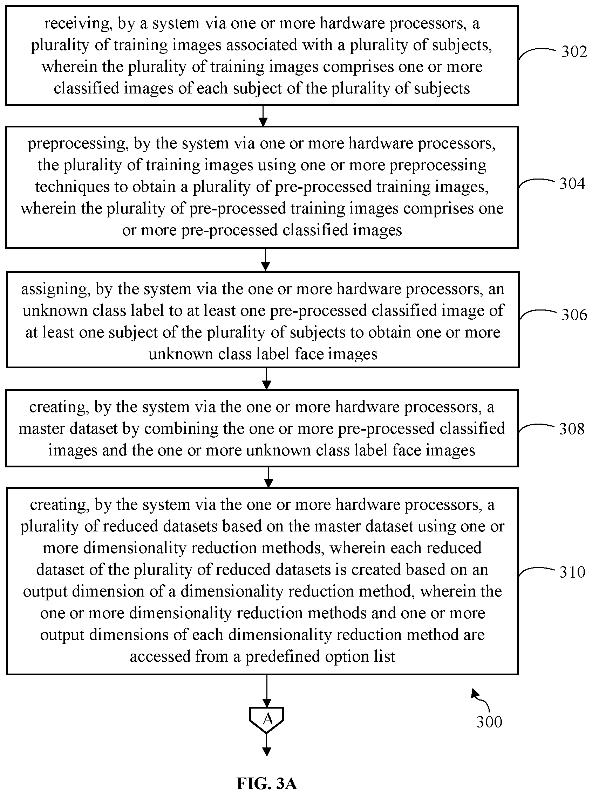

Thereafter, the system 102 performs a plurality of steps in iteration to obtain a final gene structure based on a predefined gene selection criteria from a plurality of gene structures that are created using a tiny neural network. The plurality of steps are discussed in detail with reference to FIG. 3A-3D. Further, the system 102 accesses a dimensionality reduction method, an output dimension of the respective dimensionality reduction method and one or more tiny neural network parameters of the obtained final gene structure which are then used to create a new tiny ML model. Finally, the created new tiny ML model is stored and can be implemented on an MCU platform.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of the system 102 for creating face recognition system in a tiny ML model using a genetic algorithm, in accordance with an embodiment of the present disclosure. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, the new tiny ML model, a predefined option list, a predefined gene selection criteria, a master dataset, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

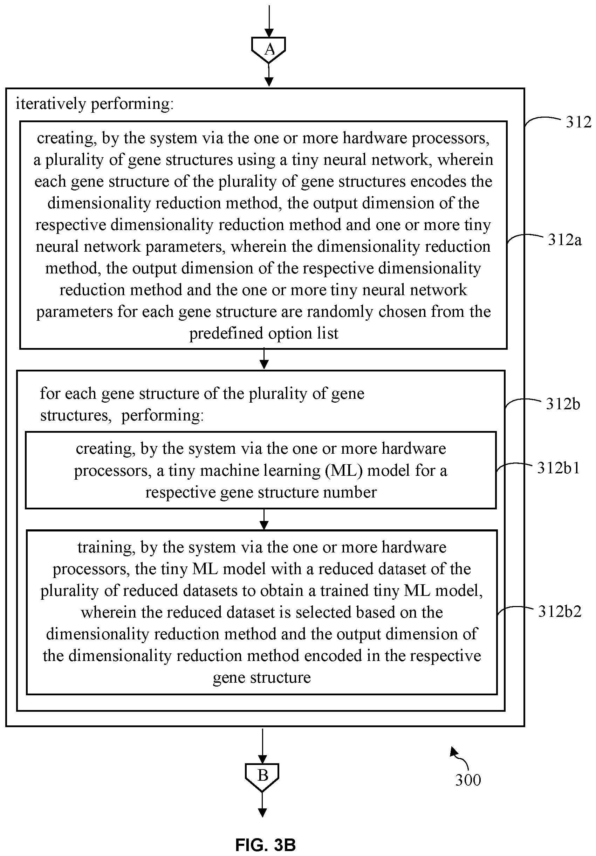

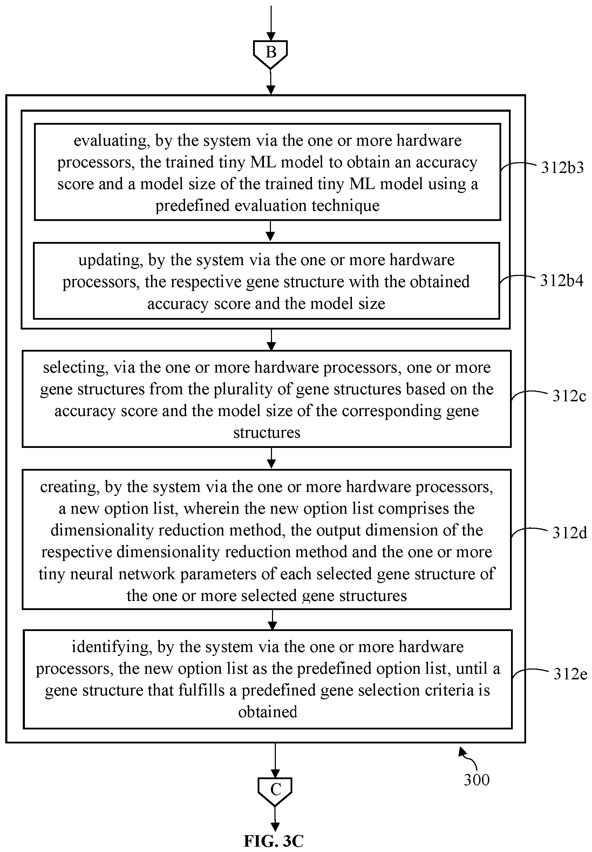

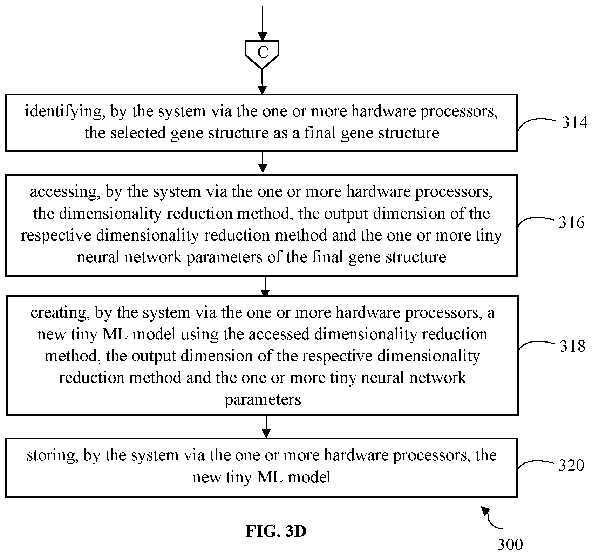

FIGS. 3A, 3B, 3C and 3D, collectively, with reference to FIGS. 1 to 3, represent an exemplary flow diagram of a method 300 for creating the face recognition system in a tiny ML model using the genetic algorithm, in accordance with an embodiment of the present disclosure. The method 300 may use the system 102 of FIGS. 1 and 2 for execution. In an embodiment, the system 102 comprises one or more data storage devices or the memory 202 operatively coupled to the one or more hardware processors 204 and is configured to store instructions for execution of steps of the method 300 by the one or more hardware processors 204. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 302 of the present disclosure, the one or more hardware processors 204 of the system 102 receive a plurality of training images associated with a plurality of subjects. The plurality of training images include one or more classified images of each subject of the plurality of subjects.

At step 304 of the present disclosure, the one or more hardware processors 204 of the system 102 preprocess the plurality of training images using one or more preprocessing techniques to obtain a plurality of pre-processed training images. Examples of the one or more preprocessing techniques include, but are not limited to, cropping region-of-interest, resizing, normalizing and the like.

In an embodiment, as part of the pre-processing, the system 102 first detects a face portion in each training image of the plurality of training images using a face detector. It should be noted that any available face detector can be used for detecting face portion. In at least one example embodiment, without limiting the scope of the invention, a Haard Cascade face detector can be used for detecting face portion of each training image. Then, the system 102 extracts the detected face portion from each training image to obtain a class label face image corresponding to each training image. In at least one example embodiment, the training image is processed such that a 100x100 region is extracted/cropped from the center of the training image. In particular, an extracted face portion of each training image is referred as a class label face image. Hence, a plurality of class label face images are obtained corresponding to the plurality of training images.

Thereafter, the system 102 performs resizing of each class label face image of the plurality of class label face images based on a predefined resizing criteria to obtain a plurality of resized face images. In at least one example embodiment, without limiting the scope of the embodiments disclosed herein, the predefined resizing criteria is a signed 8-bit format.

Once the plurality of pre-processed training images/classified images are available, the system 102 assigns an unknown class label to at least one pre-processed classified image of at least one subject of the plurality of subjects to obtain one or more unknown class label face images (see, step 306). The assignment of unknown class label to the at least one pre-processed classified image is done to train a face recognition system (to be developed) in such a way that the face recognition system starts focusing on facial features of an image. As in available approaches, during training, a subset of classes in Y, say 'j' classes are used for training may be mapped to their exact classes. The rest (k - j) classes may be masked from their labels and clubbed into one unknown class. Thus, during inference, any unregistered face is classified as unknown class. The problem with the available approaches is that many different classes of faces are clubbed into one class named, unknown. Due to which, the model is not encouraged to learn facial features. The model sees that the faces with different facial features are mapped into one class and hence it starts discarding those facial features, which further affects the learning of other classes that should be classified based on facial features. Instead, the model tries to find non-intended features such as color of dress, spectacles etc.

Hence to solve the problem existing with the available approaches, the system 102 tries to train the face recognition system by assigning 'k -j' different classes separately, where each unlabeled class is assigned a separate class label, say unknown 1, unknown 2, and so on. The training approach followed by the system 102 preserves the feature modeling as it continues to focus on facial features during the training.

At step 308 of the present disclosure, the one or more hardware processors 204 of the system 102 create a master dataset by combining the one or more pre-processed classified images and the one or more unknown class label face images.

At step 310 of the present disclosure, the one or more hardware processors 204 of the system 102 create a plurality of reduced datasets based on the master dataset using one or more dimensionality reduction methods. Examples of the one or more dimensionality reduction methods include, but are not limited to, Principal Component Analysis (PCA), Linear discriminant analysis (LDA), t-distributed stochastic neighbor embedding (t-SNE) and the like.

Each reduced dataset of the plurality of reduced datasets is created based on an output dimension of a dimensionality reduction method. The output dimension is defined based on a requirement of the model. For example, a 224x224 image may be reduced to a vector of dimensionality 32. So, here '32' is the output dimension. In at least one example embodiment, one or more output dimensions of each dimensionality reduction method are randomly selected between 1 and 128.

The one or more dimensionality reduction methods and the one or more output dimensions of each dimensionality reduction method are accessed from a predefined option list. In particular, for each output dimension of each dimensionality reduction method, a reduced dataset is created from the master dataset. In an exemplary scenario, assume there are '3' different dimensionality reduction method that are defined in the predefined option list and each dimensionality reduction method has '4' different output dimension, then in that case '3*4' i.e., '12' reduced datasets are created from the master dataset.

At step 312 of the present disclosure, the one or more hardware processors 204 of the system 102 identifies a best/final gene structure by iteratively performing a plurality of steps 312a through 312e until a gene structure that fulfills a predefined gene selection criteria is obtained. The steps 312a-312e represents the genetic algorithm that is used by the system 102 for identifying the best gene structure. In an embodiment, the gene structure is a dictionary structure, that stores the most important hyperparameters for a face detection model. And, the face detection model is a neural network architecture, that uses the important hyperparameters.

More specifically, at step 312a of the present disclosure, the one or more hardware processors 204 of the system 102 create a plurality of gene structures using a tiny neural network. Each gene structure of the plurality of gene structures encodes the dimensionality reduction method, the output dimension of the respective dimensionality reduction method and one or more tiny neural network parameters. The dimensionality reduction method, the output dimension of the respective dimensionality reduction method and the one or more tiny neural network parameters for each gene structure are randomly chosen from the predefined option list.

In an embodiment, for creating the plurality of gene structures, the system 102 first creates a plurality of gene data structures. Then, for each gene data structure of the plurality of gene data structures, the system 102 first selects a dimensionality reduction method randomly among the one or more dimensionality reduction methods that are defined in the predefined option list. Then, for the chosen dimensionality reduction method, the system 102 selects an output dimension from the one or more output dimensions of the selected dimensionality reduction method that are available in the predefined option list. Thereafter, the system 102 sets a number of neurons in an input layer of a respective gene data structure based on the selected output dimension. Further, the one or more other hyperparameters are randomly selected from the predefined option list based on the selected dimensionality reduction method and the output dimension from the predefined option list. In at least one example embodiment, the one or more other hyperparameters includes, but are not limited to, a number of hidden neurons, a feature subset, an activation function choice, a batch size and a learning rate choice. Finally, the system 102 generates a gene structure based, at least in part, on the selected dimensionality reduction method, the selected output dimension, the set number of neurons in the input layer and the selected one or more other hyperparameters. Similarly, other gene structures are also created for the plurality of gene data structures which are then referred as the plurality of gene structures.

At step 312b of the present disclosure, the one or more hardware processors 204 of the system 102 train and evaluate each gene structure of the plurality of gene structures by performing a plurality of steps 312b1 through 312b4.

More specifically, at step 312b1 of the present disclosure, the one or more hardware processors 204 of the system 102 create a tiny machine learning (ML) model for each gene structure. In particular, each gene structure is implemented in form of the tiny ML model.

At step 312b2 of the present disclosure, the one or more hardware processors 204 of the system 102 train the tiny ML model created corresponding to each gene structure with a reduced dataset of the plurality of reduced datasets to obtain a trained tiny ML model corresponding to each gene structure. In at least one example embodiment, the reduced dataset for each tiny ML model is selected based on the dimensionality reduction method and the output dimension of the dimensionality reduction method encoded in the gene structure of the respective tiny ML model.

At step 312b3 of the present disclosure, the one or more hardware processors 204 of the system 102 evaluate each trained tiny ML model to obtain an accuracy score and a model size for the respective trained tiny ML model using a predefined evaluation technique. In an embodiment, the predefined evaluation technique can be a standard deep learning evaluation where an output of the neural network is matched with a provided ground truth value of a test set.

At step 312b4 of the present disclosure, the one or more hardware processors 204 of the system 102 update the gene structure of each trained tiny ML model with the obtained accuracy score and the model size of the respective trained tiny ML model.

In this way, now each gene structure comprise the accuracy score and the model size of the tiny ML model created corresponding to the respective gene structure. So, a first pool of parent genes that represent the hyperparameter combinations for each possible classification pipeline is generated.

At step 312c of the present disclosure, the one or more hardware processors 204 of the system 102 select one or more gene structures from the plurality of gene structures based on the accuracy score and the model size of the corresponding gene structures. So, at this step, say top 'K' gene structures whose accuracy score is found to be high and the model size is found to be less are selected from the plurality of gene structures.

At step 312d of the present disclosure, the one or more hardware processors 204 of the system 102 create a new option list. In an embodiment, the new option list comprises the dimensionality reduction method, the output dimension of the respective dimensionality reduction method and the one or more tiny neural network parameters of each selected gene structure of the one or more selected gene structures.

At this step, the new option list is created with the dimensionality reduction methods, the output dimensions of the dimensionality reduction methods and the one or more tiny neural network parameters of the top 'K' selected gene structures.

At step 312e of the present disclosure, the one or more hardware processors 204 of the system 102 identifies the new option list as the predefined option list. In particular, the predefined option list that was available earlier is replaced with the new option list that is created at step 312d. This replacement may help in identifying the better gene structures that may produce small size accurate face recognition model.

The system 102 may keep on performing the steps 312a - 312e, until the systems 102 obtains a gene structure that fulfills the predefined gene selection criteria. In at least one example embodiment, the predefined gene selection criteria includes a required number of input neurons, a required number of hidden neurons, a required learning rate, batch sizes and like.

At step 314 of the present disclosure, the one or more hardware processors 204 of the system 102 identify the selected gene structure as a final gene structure.

At step 316 of the present disclosure, the one or more hardware processors 204 of the system 102 access the dimensionality reduction method, the output dimension of the respective dimensionality reduction method and the one or more tiny neural network parameters of the final gene structure which are then used to create a new tiny ML model (see, step 318).

At step 320 of the present disclosure, the one or more hardware processors 204 of the system store the new tiny ML model in a database, such as the database 208. The new tiny ML model is a face recognition system that can accurately perform face recognition in resource limited settings. In particular, the new tiny ML model may work well on microcontroller-based edge devices.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, existing techniques available for image processing like Neural Architecture Search (NAS) provides customized models for the target architecture. However, NAS requires large computing structure for building multi-objective models and suffers from high search time for searching networks connected in complex manner. So, to overcome the disadvantages, embodiments of the present disclosure provide a method and a system for creating face recognition system in a tiny machine leaning (ML) model using genetic algorithm. More specifically, the system and the method trains the face recognition system on multiple unknown classes which makes the face recognition system to focus more on the facial features for face identification purpose, hence the created face recognition system accurately distinguishes between a known and an unknow face. The created face recognition system accurately works with the standard face recognition datasets, hence ensuring scalability and applicability of the face recognition system to other images. Further, the system neither performs any multi-objective optimization nor uses any costly inter-layer connection search, thereby ensuring creation of the face recognition system in very less time even without graphic processing unit (GPU) support. Additionally, the generated face recognition system are of very small size as compared to the systems generated using existing techniques, thus ensuring accurate workability of the created face recognition system in resource limited settings, such as microcontroller-based edge devices.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
receiving (302), by a system via one or more hardware processors, a plurality of training images associated with a plurality of subjects, wherein the plurality of training images comprises one or more classified images of each subject of the plurality of subjects;
preprocessing (304), by the system via the one or more hardware processors, the plurality of training images using one or more preprocessing techniques to obtain a plurality of pre-processed training images, wherein the plurality of pre-processed training images comprises one or more pre-processed classified images;
assigning (306), by the system via the one or more hardware processors, an unknown class label to at least one pre-processed classified image of at least one subject of the plurality of subjects to obtain one or more unknown class label face images;
creating (308), by the system via the one or more hardware processors, a master dataset by combining the one or more pre-processed classified images and the one or more unknown class label face images;
creating (310), by the system via the one or more hardware processors, a plurality of reduced datasets based on the master dataset using one or more dimensionality reduction methods, wherein each reduced dataset of the plurality of reduced datasets is created based on an output dimension of a dimensionality reduction method, wherein the one or more dimensionality reduction methods and one or more output dimensions of each dimensionality reduction method are accessed from a predefined option list;
iteratively performing (312):
creating (312a), by the system via the one or more hardware processors, a plurality of gene structures using a tiny neural network, wherein each gene structure of the plurality of gene structures encodes the dimensionality reduction method, the output dimension of the respective dimensionality reduction method and one or more tiny neural network parameters, wherein the dimensionality reduction method, the output dimension of the respective dimensionality reduction method and the one or more tiny neural network parameters for each gene structure are randomly chosen from the predefined option list;
for each gene structure of the plurality of gene structures, performing (312b):
creating (312b1), by the system via the one or more hardware processors, a tiny machine learning (ML) model for a respective gene structure;
training (312b2), by the system via the one or more hardware processors, the tiny ML model with a reduced dataset of the plurality of reduced datasets to obtain a trained tiny ML model, wherein the reduced dataset is selected based on the dimensionality reduction method and the output dimension of the dimensionality reduction method encoded in the respective gene structure;
evaluating (312b3), by the system via the one or more hardware processors, the trained tiny ML model to obtain an accuracy score and a model size of the trained tiny ML model using a predefined evaluation technique; and
updating (312b4), by the system via the one or more hardware processors, the respective gene structure with the obtained accuracy score and the model size;
selecting (312c), via the one or more hardware processors, one or more gene structures from the plurality of gene structures based on the accuracy score and the model size of the corresponding gene structures;
creating (312d), by the system via the one or more hardware processors, a new option list, wherein the new option list comprises the dimensionality reduction method, the output dimension of the respective dimensionality reduction method and the one or more tiny neural network parameters of each selected gene structure of the one or more selected gene structures; and
identifying (312e), by the system via the one or more hardware processors, the new option list as the predefined option list,
until a gene structure that fulfills a predefined gene selection criteria is obtained;
identifying (314), by the system via the one or more hardware processors, the selected gene structure as a final gene structure;
accessing (316), by the system via the one or more hardware processors, the dimensionality reduction method, the output dimension of the respective dimensionality reduction method and the one or more tiny neural network parameters of the final gene structure;
creating (318), by the system via the one or more hardware processors, a new tiny ML model using the accessed dimensionality reduction method, the output dimension of the respective dimensionality reduction method and the one or more tiny neural network parameters; and
storing (320), by the system via the one or more hardware processors, the new tiny ML model.

2. The processor implemented method (400) as claimed in claim 1, wherein the step of pre-processing the plurality of training images using the one or more preprocessing techniques to obtain the plurality of pre-processed training images comprises:
detecting, by the system via the one or more hardware processors, a face portion in each training image of the plurality of training images using a face detector;
extracting, by the system via the one or more hardware processors, the detected face portion from each training image to obtain a class label face image associated with each training image, wherein a plurality of class label face images are obtained for the plurality of training images; and
resizing, by the system via the one or more hardware processors, each class label face image of the plurality of class label face images based on a predefined resizing criteria to obtain a plurality of resized face images.

3. The processor implemented method (400) as claimed in claim 1, wherein the step of creating the plurality of reduced datasets based on the master dataset using the one or more dimensionality reduction methods comprises:
for each output dimension of the one or more output dimensions of each dimensionality reduction method of the one or more dimensionality reduction methods, performing:
applying, by the system via the one or more hardware processors, a respective output dimension of a respective dimensionality reduction method on the master dataset to obtain a reduced dataset; and
storing, by the system via the one or more hardware processors, the obtained reduced dataset in a database,
wherein a collection of the reduced datasets stored in the database is referred as the plurality of reduced datasets.

4. The processor implemented method (400) as claimed in claim 1, wherein the step of creating the plurality of gene structures using the tiny neural network comprises:
creating, by the system via the one or more hardware processors, a plurality of gene data structures; and
for each gene data structure of the plurality of gene data structures, performing:
selecting, by the system via the one or more hardware processors, a dimensionality reduction method from the one or more dimensionality reduction methods that are defined in the predefined option list;
selecting, by the system via the one or more hardware processors, an output dimension from the one or more output dimensions of the selected dimensionality reduction method that are defined in the predefined option list;
setting, by the system via the one or more hardware processors, a number of neurons in an input layer of a respective gene data structure based on the selected output dimension;
selecting, by the system via the one or more hardware processors, one or more other hyperparameters from the predefined option list based on the selected dimensionality reduction method and the output dimension from the predefined option list, wherein the one or more other hyperparameters comprises a number of hidden neurons, a feature subset, an activation function choice, a batch size and a learning rate choice; and
generating a gene structure based, at least in part, on the selected dimensionality reduction method, the selected output dimension, the set number of neurons in the input layer and the selected one or more other hyperparameters,
wherein the collection of the generated gene structure for each gene data structure is referred as the plurality of gene structures.

5. A system (102), comprising:
a memory (202) storing instructions;
one or more communication interfaces (206); and
one or more hardware processors (204) coupled to the memory (202) via the one or more communication interfaces (206), wherein the one or more hardware processors (204) are configured by the instructions to:
receive a plurality of training images associated with a plurality of subjects, wherein the plurality of training images comprises one or more classified images of each subject of the plurality of subjects;
preprocess the plurality of training images using one or more preprocessing techniques to obtain a plurality of pre-processed training images, wherein the plurality of pre-processed training images comprises one or more pre-processed classified images;
assign an unknown class label to at least one pre-processed classified image of at least one subject of the plurality of subjects to obtain one or more unknown class label face images;
create a master dataset by combining the one or more pre-processed classified images and the one or more unknown class label face images;
create a plurality of reduced datasets based on the master dataset using one or more dimensionality reduction methods, wherein each reduced dataset of the plurality of reduced datasets is created based on an output dimension of a dimensionality reduction method, wherein the one or more dimensionality reduction methods and one or more output dimensions of each dimensionality reduction method are accessed from a predefined option list;
iteratively perform:
create a plurality of gene structures using a tiny neural network, wherein each gene structure of the plurality of gene structures encodes the dimensionality reduction method, the output dimension of the respective dimensionality reduction method and one or more tiny neural network parameters, wherein the dimensionality reduction method, the output dimension of the respective dimensionality reduction method and the one or more tiny neural network parameters for each gene structure are randomly chosen from the predefined option list;
for each gene structure of the plurality of gene structures, perform:
create a tiny machine learning (ML) model for a respective gene structure;
train the tiny ML model with a reduced dataset of the plurality of reduced datasets to obtain a trained tiny ML model, wherein the reduced dataset is selected based on the dimensionality reduction method and the output dimension of the dimensionality reduction method encoded in the respective gene structure;
evaluate the trained tiny ML model to obtain an accuracy score and a model size of the trained tiny ML model using a predefined evaluation technique; and
update the respective gene structure with the obtained accuracy score and the model size;
select one or more gene structures from the plurality of gene structures based on the accuracy score and the model size of the corresponding gene structures;
create a new option list, wherein the new option list comprises the dimensionality reduction method, the output dimension of the respective dimensionality reduction method and the one or more tiny neural network parameters of each selected gene structure of the one or more selected gene structures; and
identify the new option list as the predefined option list, until a gene structure that fulfills a predefined gene selection criteria is obtained;
identify the selected gene structure as a final gene structure;
access the dimensionality reduction method, the output dimension of the respective dimensionality reduction method and the one or more tiny neural network parameters of the final gene structure;
create a new tiny ML model using the accessed dimensionality reduction method, the output dimension of the respective dimensionality reduction method and the one or more tiny neural network parameters; and
store the new tiny ML model.

6. The system as claimed in claim 5, wherein for pre-processing the plurality of training images using the one or more preprocessing techniques to obtain the plurality of pre-processed training images, the one or more hardware processors (204) are configured by the instructions to:
detect a face portion in each training image of the plurality of training images using a face detector;
extract the detected face portion from each training image to obtain a class label face image associated with each training image, wherein a plurality of class label face images are obtained for the plurality of training images; and
resize each class label face image of the plurality of class label face images based on a predefined resizing criteria to obtain a plurality of resized face images.

7. The system as claimed in claim 5, wherein for creating the plurality of reduced datasets based on the master dataset using the one or more dimensionality reduction methods, the one or more hardware processors (204) are configured by the instructions to:
for each output dimension of the one or more output dimensions of each dimensionality reduction method of the one or more dimensionality reduction methods, perform:
apply a respective output dimension of a respective dimensionality reduction method on the master dataset to obtain a reduced dataset; and
store the obtained reduced dataset in a database,
wherein a collection of the reduced datasets stored in the database is referred as the plurality of reduced datasets.

8. The system as claimed in claim 5, wherein for creating the plurality of gene structures using the tiny neural network, the one or more hardware processors (204) are configured by the instructions to:
create a plurality of gene data structures; and
for each gene data structure of the plurality of gene data structures, perform:
select a dimensionality reduction method randomly from the one or more dimensionality reduction methods that are defined in the predefined option list;
select an output dimension randomly from the one or more output dimensions of the selected dimensionality reduction method that are defined in the predefined option list;
set a number of neurons in an input layer of a respective gene data structure based on the selected output dimension;
select one or more other hyperparameters randomly from the predefined option list based on the selected dimensionality reduction method and the output dimension from the predefined option list, wherein the one or more other hyperparameters comprises a number of hidden neurons, a feature subset, an activation function choice, a batch size and a learning rate choice; and
generate a gene structure based, at least in part, on the selected dimensionality reduction method, the selected output dimension, the set number of neurons in the input layer and the selected one or more other hyperparameters,
wherein the collection of the generated gene structure for each gene data structure is referred as the plurality of gene structures.

9. One or more non-transitory machine readable information storage mediums comprising one or more instructions which when executed by one or more hardware processors cause:
receiving a plurality of training images associated with a plurality of subjects, wherein the plurality of training images comprises one or more classified images of each subject of the plurality of subjects;
preprocessing the plurality of training images using one or more preprocessing techniques to obtain a plurality of pre-processed training images, wherein the plurality of pre-processed training images comprises one or more pre-processed classified images;
assigning an unknown class label to at least one pre-processed classified image of at least one subject of the plurality of subjects to obtain one or more unknown class label face images;
creating a master dataset by combining the one or more pre-processed classified images and the one or more unknown class label face images;
creating a plurality of reduced datasets based on the master dataset using one or more dimensionality reduction methods, wherein each reduced dataset of the plurality of reduced datasets is created based on an output dimension of a dimensionality reduction method, wherein the one or more dimensionality reduction methods and one or more output dimensions of each dimensionality reduction method are accessed from a predefined option list;
iteratively performing:
creating a plurality of gene structures using a tiny neural network, wherein each gene structure of the plurality of gene structures encodes the dimensionality reduction method, the output dimension of the respective dimensionality reduction method and one or more tiny neural network parameters, wherein the dimensionality reduction method, the output dimension of the respective dimensionality reduction method and the one or more tiny neural network parameters for each gene structure are randomly chosen from the predefined option list;
for each gene structure of the plurality of gene structures, performing:
creating a tiny machine learning (ML) model for a respective gene structure;
training the tiny ML model with a reduced dataset of the plurality of reduced datasets to obtain a trained tiny ML model, wherein the reduced dataset is selected based on the dimensionality reduction method and the output dimension of the dimensionality reduction method encoded in the respective gene structure;
evaluating the trained tiny ML model to obtain an accuracy score and a model size of the trained tiny ML model using a predefined evaluation technique; and
updating the respective gene structure with the obtained
accuracy score and the model size;
selecting one or more gene structures from the plurality of gene structures based on the accuracy score and the model size of the corresponding gene structures;
creating a new option list, wherein the new option list comprises the dimensionality reduction method, the output dimension of the respective dimensionality reduction method and the one or more tiny neural network parameters of each selected gene structure of the one or more selected gene structures; and
identifying the new option list as the predefined option list, until a gene structure that fulfills a predefined gene selection criteria is obtained;
identifying, the selected gene structure as a final gene structure;
accessing the dimensionality reduction method, the output dimension of the respective dimensionality reduction method and the one or more tiny neural network parameters of the final gene structure;
creating a new tiny ML model using the accessed dimensionality reduction method, the output dimension of the respective dimensionality reduction method and the one or more tiny neural network parameters; and
storing the new tiny ML model.

10. The one or more non-transitory machine-readable information storage mediums as claimed in claim 9, wherein the step of pre-processing the plurality of training images using the one or more preprocessing techniques to obtain the plurality of pre-processed training images comprises:
detecting a face portion in each training image of the plurality of training images using a face detector;
extracting the detected face portion from each training image to obtain a class label face image associated with each training image, wherein a plurality of class label face images are obtained for the plurality of training images; and
resizing each class label face image of the plurality of class label face images based on a predefined resizing criteria to obtain a plurality of resized face images.

11. The one or more non-transitory machine-readable information storage mediums processor implemented method of claim 9, wherein the step of creating the plurality of reduced datasets based on the master dataset using the one or more dimensionality reduction methods comprises:
for each output dimension of the one or more output dimensions of each dimensionality reduction method of the one or more dimensionality reduction methods, performing:
applying a respective output dimension of a respective dimensionality reduction method on the master dataset to obtain a reduced dataset; and
storing the obtained reduced dataset in a database,
wherein a collection of the reduced datasets stored in the database is referred as the plurality of reduced datasets.

12. The one or more non-transitory machine-readable information storage mediums processor implemented method as claimed in claim 9, wherein the step of creating the plurality of gene structures using the tiny neural network comprises:
creating a plurality of gene data structures; and
for each gene data structure of the plurality of gene data structures, performing:
selecting a dimensionality reduction method from the one or more dimensionality reduction methods that are defined in the predefined option list;
selecting an output dimension from the one or more output dimensions of the selected dimensionality reduction method that are defined in the predefined option list;
setting a number of neurons in an input layer of a respective gene data structure based on the selected output dimension;
selecting one or more other hyperparameters from the predefined option list based on the selected dimensionality reduction method and the output dimension from the predefined option list, wherein the one or more other hyperparameters comprises a number of hidden neurons, a feature subset, an activation function choice, a batch size and a learning rate choice; and
generating a gene structure based, at least in part, on the selected dimensionality reduction method, the selected output dimension, the set number of neurons in the input layer and the selected one or more other hyperparameters,
wherein the collection of the generated gene structure for each gene data structure is referred as the plurality of gene structures.
